(19) **Europäisches Patentamt / European Patent Office / Office européen des brevets**

(11) **EP 1 666 788 B1**

(12) **EUROPÄISCHE PATENTSCHRIFT**

(45) Veröffentlichungstag und Bekanntmachung des Hinweises auf die Patenterteilung:
**21.10.2009 Patentblatt 2009/43**

(51) Int Cl.:
***F21V 7/04*** *(2006.01)*

(21) Anmeldenummer: **05012057.5**

(22) Anmeldetag: **03.06.2005**

(54) **Verfahren zur Auslegung einer Entladungslampe**

Method for designing a discharge lamp

Méthode de conception d'une lampe à décharge

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **02.07.2004 DE 102004032406**

(43) Veröffentlichungstag der Anmeldung:
**07.06.2006 Patentblatt 2006/23**

(73) Patentinhaber: **Osram Gesellschaft mit beschränkter Haftung**
**81543 München (DE)**

(72) Erfinder: **Rehn, Henning, Dr.**
**13437 Berlin (DE)**

(56) Entgegenhaltungen:
**US-A- 5 829 858          US-A- 5 884 991**

## Beschreibung

### Technisches Gebiet

Die Erfindung betrifft ein Verfahren zur Auslegung einer Entladungslampe nach dem Oberbegriff des Anspruchs 1 sowie eine nach einem derartigen Verfahren ausgelegte Lampe und einen nach einem derartigen Verfahren ausgelegten Reflektor. Ein derartiges Verfahren ist bekannt aus US 5.829.858.

### Stand der Technik

Der Markt für Digitalprojektoren zur Daten- oder Videoprojektion wächst seit Erfindung der DLP-Technologie weltweit stark an. Diese zunehmende Verbreitung ist unter anderem auch damit begründet, dass die Projektoren aufgrund der eingesetzten Technologien immer preisgünstiger herstellbar sind und in ihren Abmessungen so kompakt ausgeführt werden, dass sie einen mobilen Einsatz im Büroalltag ermöglichen.

Das optische System (light engine) von Digitalprojektoren weist üblicherweise ein Mikrodisplay-Panel auf, das im Prinzip einen Chip darstellt, auf dessen Oberfläche ansteuerbare Pixel angeordnet sind. Durch das optische System des Projektors wird das Panel beleuchtet und das entstehende Bild mittels des Projektionsobjektivs an die Wand projeziert. Prinzipiell werden drei Haupttypen von Mikrodisplays unterschieden: DMD, LCD, LCoS. Die Miniaturisierung der Projektoren hängt unter anderem von der Größe dieser Mikrodisplay-Panels und auch von den eingesetzten Lichtquellen ab. Der Grundaufbau eines Projektors mit LCD-Panel ist beispielsweise in der US 5,902,033 beschrieben, während hinsichtlich der Funktion der DMD-Panels auf die einschlägigen Patentanmeldungen der Firma Texas Instruments verwiesen wird, die auf das DLP-Verfahren (Digital Light Processing ®) gerichtet sind.

Bei den vorbeschriebenen digitalen Projektionssystemen werden als Lichtquelle überwiegend Hochdruckentladungslampen eingesetzt, wie sie beispielsweise unter www.osram.com unter Video- und Projektionslampen (VIP-Lampen) beschrieben sind. Diese Hochdruckentladungslampen haben einen Brenner, der in einen Glasreflektor eingesetzt ist. Bei der Auslegung derartiger Hochdruckentladungslampen muss beachtet werden, dass bei den auftretenden sehr hohen Temperaturen weder der Reflektor noch der Brenner thermisch geschädigt werden. Diese Brenner haben in der Regel eine etwa mittig angeordnete Entladungskammer, die in zwei diametral zueinander angeordnete Brennerschäfte übergeht. Aufgrund der vergleichsweise großen Axiallänge dieser Brenner wird ein Teil der abgegebenen Strahlung auf den Endabschnitt des Schafts reflektiert, so dass dieser einer starken thermischen Belastung ausgesetzt ist. In der EP 1 220 294 A1 wird vorgeschlagen, den Endabschnitt des Schafts mit einer Reflexionsschicht zu versehen, die als Wärmeschutzschicht wirkt und die auftretende Strahlung reflektiert, so dass eine zusätzliche Erwärmung des Brenners in diesem Bereich vermieden werden kann. Alternativ oder zusätzlich kann eine Zufuhr von Kühlluft erfolgen, die dafür erforderlichen Lüfter vergrößern jedoch sowohl den Bauraum des Projektors als auch dessen Lärmemissionen.

### Darstellung der Erfindung

Es ist Aufgabe der vorliegenden Erfindung, ein Verfahren zur Auslegung einer Entladungslampe, eine nach einem derartigen Verfahren ausgelegte Lampe, insbesondere eine Entladungslampe und einen dafür geeigneten Reflektor zu schaffen, die einen minimalen Bauraum, eine hohe optische Effizienzund eine geringe thermische Beslastung aufweisen.

Diese Aufgabe wird hinsichtlich des Verfahrens durch die Merkmalskombination des Anspruchs 1, hinsichtlich der Lampe, insbesondere der Entladungslampe durch die Merkmalskombination des Anspruchs 5 und hinsichtlich des Reflektors durch die Merkmalskombination des Anspruchs 9 gelöst. Besondere vorteilhafte Ausgestaltungen finden sich in den abhängigen Ansprüchen.

Erfindungsgemäß erfolgt die Auslegung des Reflektors in Abhängigkeit von einigen wenigen Parametern, wie von der Etendue (Lichtleitwert) und vom Akzeptanzwinkel des lichtsammelnden Systems und von der Länge eines Entladungsbogens einer eingesetzten Entladungslampe. Mit diesen Parametern lässt sich dann die numerische Exzentrizität, d. h., die Form des elliptischen Reflektors bestimmen, wobei eine in Abhängigkeit vom Akzeptanzwinkel berechnete Exzentrizität mit einem Anpassungswert korrigiert wird, der von der Etendue und der Bogenlänge abhängt. D. h., mit diesem Anpassungswert erfolgt eine Anpassung des Reflektors an das lichtsammelnde System.

Erfindungsgemäß wird somit die Form der Ellipse in Abhängigkeit von diesen Parametern ermittelt, wobei zwei der Parameter (Etendue und Akzeptanzwinkel) durch das optische System vorgegeben sind, während der dritte Parameter (Bogenlänge) durch die verwendete Lampe vorgegeben ist. Unabhängig von der Größe des Reflektors ist dann die maximale Effizienz des lichtsammelnden Systems gewährleistet.

Die Erfindung ermöglicht es somit, auf äußerst einfache Weise die Geometrie eines elliptischen Reflektors in Abhängigkeit von wenigen Parametern in optimaler Weise an das lichtsammelnde System, beispielsweise eines Projektors anzupassen.

Um den Bauraum des Systems weiter zu minimieren, können erfindungsgemäß die beiden Ellipsenachsen bei der vorgegebenen Exzentrizität so ausgewählt werden, dass die eingangs beschriebene thermische Belastung des Reflektors oder der Lampe minimal ist.

Bei Entladungslampen für Projektionssysteme ist der Entladungsbogen im Brennpunkt $F_1$ (kleinere Brennweite) des elliptischen Reflektors angeordnet. Diese Brennweite wird erfindungsgemäß $\geq$ 8 mm gewählt - es zeigte sich, dass dieses Maß ein optimaler Kompromiss zwischen einer kompakten Bauweise und einer minimalen thermischen Belastung des Brenners und des Reflektors darstellt. Die Größe des Reflektors wird so gewählt, dass der Brenner sich entweder vollständig oder nahezu im Aperturloch befindet. Unter einem derartigen Aperturloch wird ein mittiger Bereich verstanden, in den der Reflektor aufgrund der typischen Strahlstärkeverteilung des Brenners nicht abstrahlt. In Abhängigkeit von dieser Bedingung (Brennerende liegt innerhalb des Aperturlochs) lässt sich die größere Brennweite, in der die vom Brenner abgestrahlten Lichtstrahlen mittels des elliptischen Reflektors gebündelt werden, in Abhängigkeit von der Länge und dem Durchmesser eines Brennerschaftes sowie von der zuvor berechneten Exzentrizität ermitteln. In Kenntnis dieser Brennweite können dann durch einfache geometrische Betrachtungen die beiden Ellipsenachsen berechnet werden.

Die Baulänge der Lampe lässt sich weiter verkürzen, wenn zugelassen wird, dass der Brennerschaft etwas aus dem Aperturloch hervorsteht. In diesem Fall geht in die Berechnung der größeren Brennweite zusätzlich zu den vorbeschriebenen Parametern dann noch der Winkelbereich ein, um den der Brenner aus dem Aperturloch heraussteht.

Der für den Einbau des Reflektors erforderliche Bauraum ist minimal, wenn dieser mit Abflachungen versehen wird, von denen jeweils zwei im Parallelabstand zueinander angeordnet sind, wobei vorzugsweise der Abstand zweier Abflachungen geringer ist als der Abstand der beiden anderen Abflachungen.

Der Brenner wird vorzugsweise als Hochdruckentladungslampe ausgeführt.

## Kurze Beschreibung der Zeichnungen

Im folgenden wird die Erfindung anhand von Ausführungsbeispielen unter Bezugnahme auf Zeichnungen näher erläutert. Es zeigen:

Figur 1     eine Schemadarstellung eines Projektors mit einer Hochdruckentladungslampe und einem optischen System des Projektors;

Figur 2     eine Prinzipdarstellung zur Erläuterung der Geometrie eines elliptischen Reflektors der Hochdruckentladungslampe aus Figur 1;

Figur 3     eine vergrößerte Darstellung der Hochdruckentladungslampe aus Figur 1;

Figur 4     eine Variante der Hochdruckentladungslampe gemäß Figur 3;

Figur 5     ein weiteres Ausführungsbeispiel einer Hochdruckentladungslampe mit abgeflachtem Reflektor und

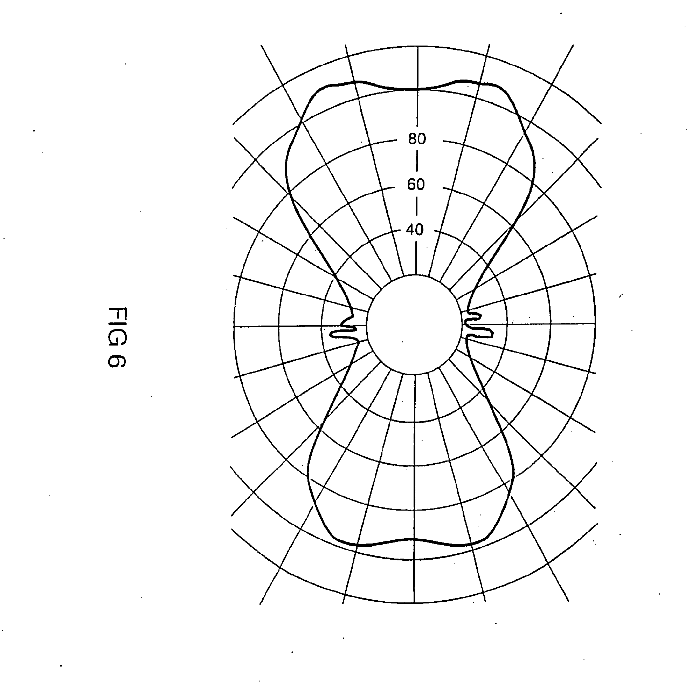

Figur 6     eine Strahlstärkeverteilung einer Hochdruckentladungslampe.

## Bevorzugte Ausführungen der Erfindung

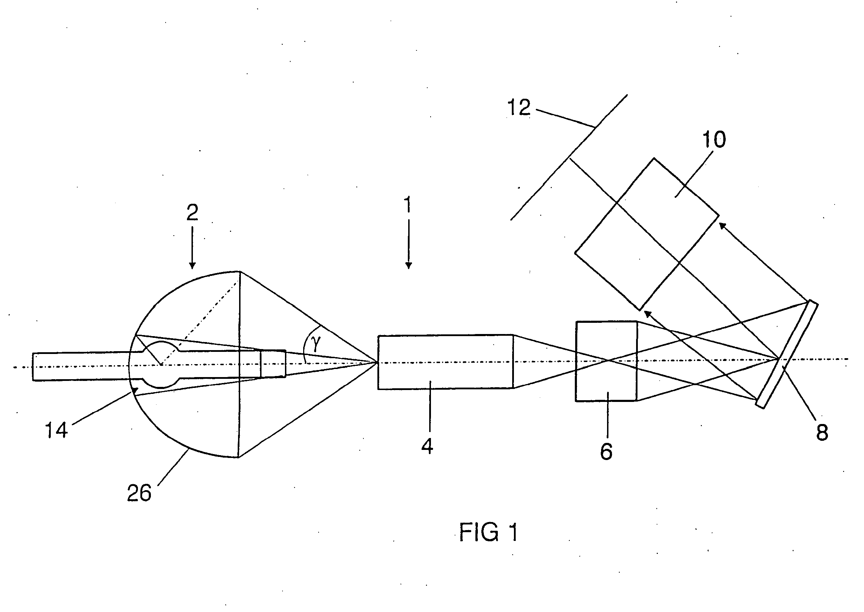

Figur 1 zeigt den Grundaufbau eines DLP (Digital Light Processing)-Projektors zur Videoprojektion. Das optische System des Projektors 1 besteht im Wesentlichen aus einer HID-Lampe (High-Intensity-Discharge-Lampe) 2, einem Integrator 4, einer Relay-Optik 6, einem DMD-Chip 8 sowie dem Objektiv 10, über das die Abbildung auf einen Bildschirm 12 projiziert wird. Nicht dargestellt ist das bei der DLP-Technik verwendete Farbrad, das meist zwischen dem Integrator 4 und der Lampe 2 angeordnet ist. Die Bauelemente HID-Lampe 2, Integrator 4, Relay-Optik 6, DMD-Chip 8 sowie Objektiv 10 werden auch als light engine bezeichnet.

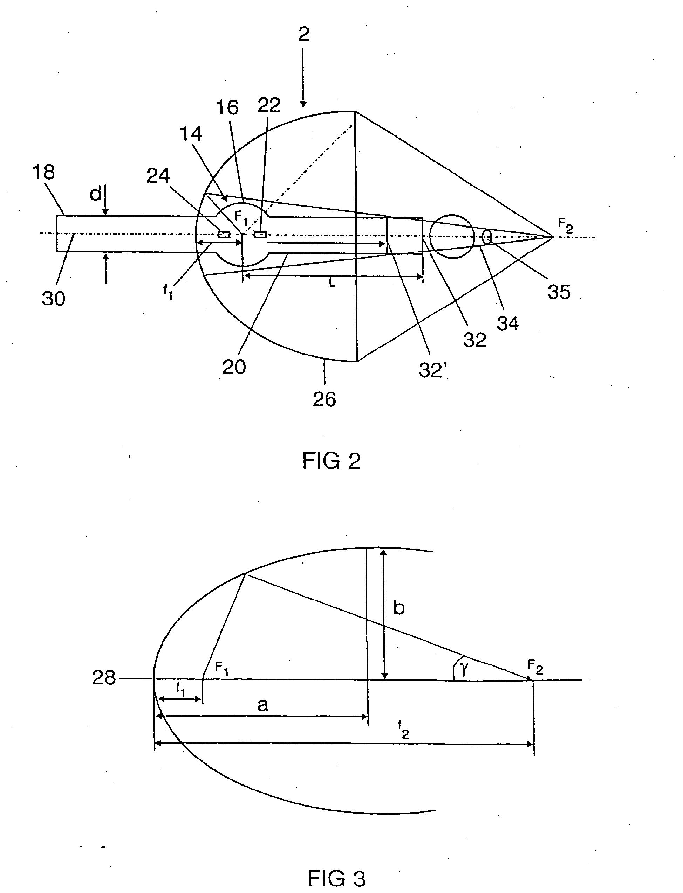

Figur 2 zeigt eine vergrößerte Darstellung der HID-Lampe 2 aus Figur 1. Demgemäß hat diese einen Brenner 14, dessen Kolben etwa mittig ein Entladungsgefäß 16 hat, an sich zwei axial vorspringende Brennerschäfte 18, 20 anschliessen. Im Entladungsgefäß 16 sind zwei Wolfram-Elektroden 22, 24 (schematisch dargestellt) angeordnet, die mit einem vorbestimmten Abstand zueinander angeordnet sind, der die Länge g (nicht dargestellt) eines Entladungsbogens bestimmt.

Der Aufbau derartiger HID-Lampen ist bekannt, diese werden beispielsweise unter www.osram.de unter dem Namen VIP-Lampen beschrieben, so dass weitere Erläuterungen entbehrlich sind.

Der Brenner 14 ist in einen elliptischen, im Wesentlichen rotationssymetrischen Reflektor 26 eingesetzt, der mit einer Reflektionsschicht versehen ist. Das Entladungsgefäß 16 mit den beiden Elektroden 22, 24 ist so angeordnet, dass der entstehende Entladungsbogen in einem Brennpunkt $F_1$ des Reflektors 26 liegt. Das im Entladungsgefäß 16 durch den Entladungsbogen erzeugte Licht wird durch den Reflektor 26 auf den Fokus $F_2$ abgebildet, der in der Eingangsapertur des Integrators 4 liegt. Da der Entladungsbogen keine punktförmige Lichtquelle darstellt erfolgt diese Abbildung nicht - wie in Figur 2 idealisiert dargestellt - punktförmig exakt im Fokus $F_2$.

Das von der HID-Lampe 2 abgestrahlte Licht wird durch Mehrfachreflektion im Integrator 4 vergleichmäßigt und dann austrittsseitig über die Relay-Optik 6 auf den DMD-Chip 8 abgebildet. Über diesen wird das eigentliche Bild erzeugt. Auf dem DMD-Chip 8 befinden sich je nach Ausführung beispielsweise 600.000 schwenkbare Mikrospiegel, die als Lichtventil wirken. Je nach Spiegelstellung kann dabei ein Bildpixel erzeugt werden oder dunkel bleiben. Das von dem DMD-Chip 8 reflektierte Licht bekommt von dem davor angeordneten Farbrad die entsprechende Farbinformation. Graustufen und Farbnuancen werden durch eine entsprechend längere oder kürzere Reflektionszeit wiedergegeben. Das vom DMD-Chip 8 abgegebene Bild wird schließlich über das Objektiv 10 auf die Leinwand 12 abgebildet.

Bei der Auslegung der Projektoren 1 ist man bemüht, diese möglichst kompakt und mit hoher Effizienz auszubilden, so dass eine brilliante Projektion mit großer Helligkeit und gutem Kontrast ermöglicht ist. Dabei ist das lichtsammelnde System des Projektors 1 mit dem Integrator 4, der Relay-Optik 6 und dem DMD-Chip 8 in der Regel vorgegeben, so dass entsprechend auch die Etendue (Fläche und Akzeptanzwinkel) des DMD-Chip 8 als Konstanten vorgegeben sind.

Die Spiegel des DMD-Chips 8 eines 0,7"-DMD-Chips 8 lassen sich üblicherweise um 12° auslenken, so dass der Akzeptanzwinkel $\gamma$ des DMD-Chips entsprechend 12° beträgt. Durch die Relay-Optik 6 wird dieser Akzeptanzwinkel aufgeweitet, so dass der Akzeptanzwinkel $\gamma'$ des lichtsammelnden Systems etwa zwischen 20° und 40° beträgt. Eine Optimierung kann dann in einem vorhandenen Projektionssystem in der Regel nur durch geeignete Auslegung der HID-Lampe 2 erfolgen.

Es sei nun angenommen, dass bei gegebenem Brenner 14 mit einer bestimmten Länge g des Entladungsbogens und einer Länge L (Figur 2) des halben Brenners 14 (Abstand Mittelpunkt des Entladungsgefässes 16 bis Stirnfläche des Brennerschafts 20) und einem vorhandenen lichtsammelnden System mit der Etendue E und dem Akzeptanzwinkel $\gamma'$ ein Reflektor 26 ausgelegt werden soll, der möglichst kompakt gebaut ist und des Weiteren die thermische Belastung der Bauelemente der HID-Lampe 2 minimiert.

Auslegung der Ellipsengeometrie des Reflektors

In einem ersten Auslegungsschritt wird zunächst die die Geometrie des Reflektors 26 im Wesentlichen charakterisierende Exzentriezität $e_a$ bestimmt. Diese berechnet sich nach:

$$e_a = \frac{\sqrt{2} + 1 - \tan\frac{\gamma'}{2}}{\sqrt{2} + 1 + \tan\frac{\gamma'}{2}} \qquad \text{Gleichung 1}$$

mit $\gamma'$: Akzeptanzwinkel

In einem weiteren Schritt wird ein Anpassungsfaktor für die Exzentrizität berechnet, der im Wesentlichen von den vorgenannten Parametern des Projektors 1 abhängt. Dieser Anpassungsfaktor $\Delta e$ berechnet sich nach:

$$\Delta e = 1.3 \sin 2\gamma' \exp\left(-2\frac{E^{0.17}}{g}\right) \qquad \text{Gleichung 2}$$

mit g: Länge des Entladungsbogens;
E: Etendue
$\gamma'$: Akzeptanzwinkel.

Die numerische Exzentrizität $e_0$ berechnet sich dann aus der Differenz zwischen der Exzentrizität $e_a$ und dem Anpassungsfaktor $\Delta e$:

$$e_o = e_a(\gamma') - \Delta e(\gamma', E, g) \qquad \text{Gleichung 3}$$

Bei einem 0,7"-DMD-Chip 6 mit einem Spiegelkippwinkel von 12° und einer Etendue von E = 20 mm²sr ergeben sich dann bei einer bestimmten Relay-Optik 6 die in Tabelle 1 dargestellten numerischen Exzentrizitätswerte $e_0$ bei einem von der Relay-Optik 6 bestimmten Akzeptanzwinkel $\gamma'$.

Tabelle 1

| $\gamma$ | $e_a$ | $e_o$ |
|---|---|---|
| 23° | 0.85 | 0.81 |
| 29° | 0.81 | 0.77 |
| 34° | 0.77 | 0.72 |

Mit den vorbeschriebenen Auslegungsregeln ist somit die Grundform des elliptischen Reflektors 26 vorgegeben. Zur Minimierung des Reflektors 26 müssen einige thermische Auslegungskriterien berücksichtigt werden.

Auslegung der Größe des Reflektors

Wie eingangs erläutert, können beim Betrieb eines hochwattigen Brenners in einem sehr kleinen elliptischen Reflektor thermische Probleme auftreten, wobei im Besonderen der Abstand des Brenners 14 zum Reflektor 26 kritisch ist, da ein zu kleiner Abstand zu einem engen thermischen Kontakt zwischen Brenner 14 und Reflektor 26 führen kann. Bisher wurde eine thermische Belastung dadurch vermieden, dass beispielsweise hochwertige Reflektoren aus Glaskeramik verwendet wurden oder die Brenner mittels einer Kittung in ein Keramikteil des Reflektors eingekittet wurden.

Ein weiteres thermisches Problem besteht darin, dass der Brennerschaft 20 so lang ist, dass er in den abgestrahlten Lichtkegel hineinragt und durch Absorption des Lichtes erwärmt wird. Zur Beseitigung dieses Problems wurde in der eingangs genannten EP 1 220 294 A1 angeregt, den Endabschnitt des Brennerschaftes 20 mit einer Reflektionsschicht zu versehen. Die Erfindung wendet sich von dieser vergleichsweise aufwendigen Lösung ab und vermeidet die thermische Belastung durch geeignete Auslegung des Reflektors 26. Dies wird anhand der schematischen Darstellungen in den Figuren 2 bis 5 erläutert.

Figur 3 zeigt ein Ellipsoid, nach dem der Reflektor 26 gefertigt ist. Dieses Ellipsoid ist unter anderem durch den Brennpunkt $F_1$ und den Fokus $F_2$ gekennzeichnet, wobei der Abstand des Brennpunkts $F_1$ vom Scheitel 28 die Brennweite $f_1$ definiert, während der Abstand des Fokus $F_2$ vom Scheitel 28 der Brennweite $f_2$ entspricht. In Figur 3 sind des Weiteren die beiden Ellipsenhalbachsen a (längere Halbachse) und b (kürzere Halbachse) eingezeichnet. Ein vom Brennpunkt $F_1$ ausgehender Lichtstrahl wird durch den Ellipsoid zum Fokus $F_2$ hin reflektiert - in Figur 3 fällt dieser Lichtstrahl beispielhaft mit dem Winkel $\gamma$ zum Fokus $F_2$ hin ein.

Erfindungsgemäß wird der Brenner 14 derart in der optischen Achse 30 des Reflektors 26 angeordnet, dass der Brennerschaft 20, insbesondere dessen Stirnfläche 32 vollständig innerhalb des Aperturlochs 35 angeordnet ist, das durch den Aperturkegel 34 gekennzeichnet ist. Dieser begrenzt denjenigen Bereich des Brenners 14 in dem keine Abbildung erfolgt. Legt man nun die Stirnfläche 32 in diesen Aperturkegel 34 hinein, so trifft die vom Reflektor 26 reflektierte Strahlung nicht auf den Brennerschaft 20 auf, so dass dieser auch nicht zusätzlich durch Absorption von Strahlungsenergie erwärmt wird.

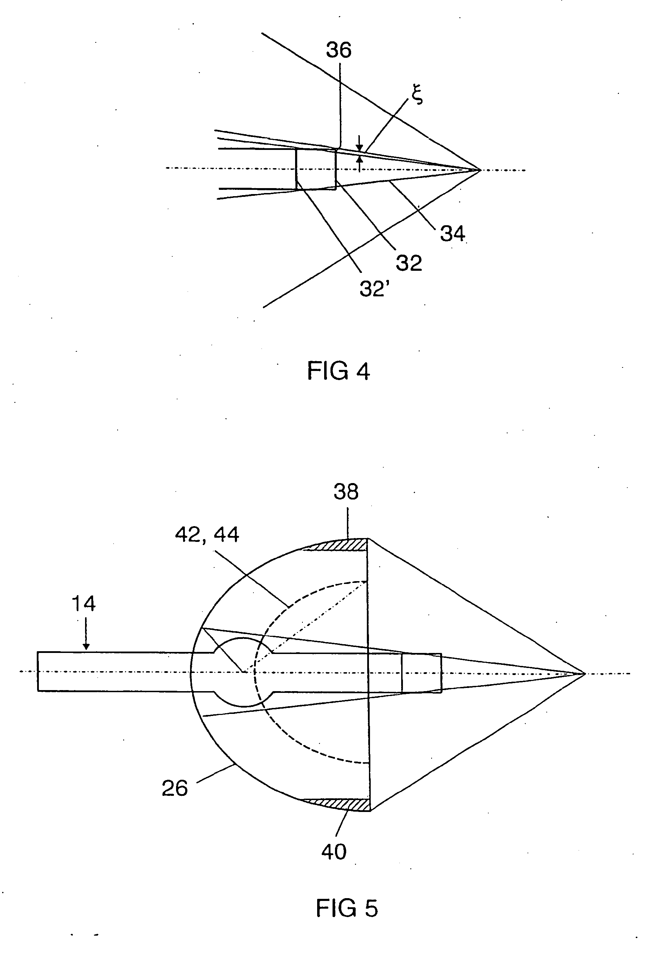

Bei dem in Figur 2 dargestellten Ausführungsbeispiel liegt die Stirnfläche 32 nicht exakt im Aperturkegel 34 sondern steht mit ihren Aussenumfangsabschnitten 36 (siehe vergrößerte Darstellung gemäß Figur 4) über den Aperturkegel 34 hinaus. Mit dem Bezugszeichen 32' ist in den Figuren 2 und 4 diejenige Position der Stirnfläche 32 gekennzeichnet, bei der diese vollständig im Aperturkegel 34 liegen würde - um diese Position zu erreichen, müsste dann ein axial kürzer gebauter Brenner 14 verwendet werden.

Erfindungsgemäß kann jedoch ein geringes Herausragen der Umfangsabschnitte 36 - wie in Figur 4 dargestellt - akzeptiert werden, wobei dieser Winkelbereich durch den Winkel $\zeta$ in Figur 4 gekennzeichnet ist und weniger als 2°, vorzugsweise weniger als 1° betragen sollte.

Für den Fall, in dem die thermische Belastung des Brennerschafts 20 minimal sein soll, wird die Stirnfläche (wie mit 32' dargestellt) vollständig in den Aperturkegel 34 eingebracht. Bei gegebener Länge L und Durchmesser d des Brennerschafts 20 berechnet sich die Brennweite $f_2$ dann nach

$$f_2 = \frac{L + \dfrac{d}{4}\left[\dfrac{\sqrt{2}+1}{m} - \dfrac{m}{\sqrt{2}+1}\right]}{1-m} \qquad \text{Gleichung 4}$$

mit dem Brennweitenverhältnis m

$$m = \frac{1-e_o}{1+e_o} = \frac{f_1}{f_2} \qquad \text{Gleichung 5}$$

Dieses Brennweitenverhältnis m kann in Abhängigkeit von der eingangs berechneten numerischen Exzentrizität $e_0$ ermittelt werden.

Aus dieser Brennweite $f_2$ errechnet sich dann die größere Ellipsenhalbachse a nach

$$a = \frac{f_2}{1+e_o} \qquad \text{Gleichung 6}$$

und die kleinere Ellipsenhalbachse b nach

$$b = a\sqrt{1-e_o{}^2} \qquad \text{Gleichung 7.}$$

In dem Fall, in dem ein geringes Herausragen des Brennerschaftes 20 aus dem Aperturkegel 34 und somit eine geringfügige thermische Belastung des Brenners 14 zugelassen wird, berechnet sich die Brennweite $f_2$ nach der Gleichung 8

$$f_2 = \frac{1}{1-m}\left[ L + \frac{d}{2} \frac{\left(\frac{\sqrt{2}+1}{m} - \frac{m}{\sqrt{2}+1}\right) - 2\tan\xi}{2 + \left(\frac{\sqrt{2}+1}{m} - \frac{m}{\sqrt{2}+1}\right)\tan\xi} \right] \qquad \text{Gleichung 8}$$

Aus den Gleichungen 6, 7 können dann wieder die beiden Halbachsen a, b der Ellipse in Abhängigkeit von der Brennweite $f_2$ und der numerischen Exzentrizität $e_0$ berechnet werden.

Die thermische Belastung des Brenners 14 lässt sich weiter absenken, wenn die Brennweite $f_1$, d. h., der Mittelabstand des Entladungsgefäßes 16 vom Scheitel 28 des Ellipsoids größer als 8 mm gewählt wird, so dass der Brenner und der Reflektor zuverlässig thermisch entkoppelt sind.

Wendet man die vorbeschriebenen Auslegungskriterien auf einen Projektor mit einem 0.7"-DMD-Chip 8 mit 12° Kippwinkel (10 % overfill) an, wobei sich durch die Relay-Optik 6 ein Akzeptanzwinkel von 30° einstellt, so ergeben sich die in Tabelle 2 dargestellten Kennwerte in Abhängigkeit von der entsprechend vorgegebenen Etendue E, dem Akzeptanzwinkel $\gamma'$, der Länge des Entladungsbogens g, der Länge L des Brennerschafts 20, dem Durchmesser d des Brennerschafts 20 und dem erlaubten Herausragen $\zeta$ des Brennerschafts 20 aus dem Aperturkegel die in Tabelle 2 angegebenen Werte, die sich ohne weiteres mit Hilfe der sehr einfach aufgebauten Gleichungen 1 bis 8 berechnen lassen.

**Tabelle 2**

| Größe | Wert | Einheit |
|---|---|---|
| E | 22.7 | $mm^2sr$ |
| $\gamma'$ | 30 | ° |
| g | 1.0 | mm |
| L | 31 | mm |
| d | 6 | mm |

(fortgesetzt)

| Größe | Wert | Einheit |
|---|---|---|
| $\xi$ | 0.48 | ° |
| $e_a$ | 0.800 | |
| $\Delta e$ | 0.038 | |
| $e_o$ | 0.762 | |
| m | 0.135 | |
| $f_2$ | 64.56 | mm |
| $f_1$ | 8.74 | mm |
| a | 36.65 | mm |
| b | 23.75 | mm |

Die durch den Anpassungsfaktor $\Delta e$ verursachte Verringerung der numerischen Exzentrizität führt nicht nur zu einer optimalen Effizienz des Systems, sondern auch zu einer Erhöhung des Brennweitenverhältnisses von m und damit bei gegebener Brennwerte $f_2$ zu einem größeren $f_1$ und somit zu einem größeren Abstand zwischen dem Entladungsgefäß 16 und dem Scheitel 28 des Reflektors.

In Figur 5 ist eine weitere Möglichkeit dargestellt, den für die HID-Lampe 2 benötigten Bauraum zu minimieren. Demgemäß ist der Reflektor 26 mit Abflachungen 38, 40 sowie zwei oberhalb und unterhalb der Zeichenebene in Figur 5 dargestellten Abflachungen 42, 44 versehen, die in Figur 5 gestrichelt angedeutet sind. Diese Abflachungen werden durch "Wegschneiden" der in Figur 5 schraffiert angedeuteten Bereiche geschaffen. Gemäß Figur 5 wurde bei den Abflachungen 42, 44 mehr Material vom ursprünglich kreisförmigen Reflektor 26 abgenommen, als es für die Abflachungen 38, 40 erforderlich ist. D. h., der Reflektor 26 hat senkrecht zur Zeichenebene in Figur 5 eine geringere Breite als in der Zeichenebene. Die Abflachungen stellen einen Kompromiß zwischen kleiner Baugröße und hoher Effizienz dar.

Bei den vorbeschriebenen Ausführungsbeispielen wurde eine HID-Lampe 2 verwendet. Selbstverständlich können auch andere Entladungslampen, im Hinblick auf die Auslegung der Abmessungen a, b prinzipiell auch Glühlampen verwendet werden. Anstelle der beschriebenen DMD-Chips 8 können auch andere, beispielsweise die in der Beschreibungseinleitung genannten Bauarten eingestetzt werden.

Die Erfindung betrifft ein Verfahren zur Auslegung einer Entladungslampe zur Verwendung mit einem lichtsammelnden System, insbesondere eines Projektors zur Daten- oder Videoprojektion. Offenbart sind des Weiteren eine nach einem derartigen Verfahren ausgelegte Lampe und ein dafür vorgesehener Reflektor.

**Patentansprüche**

1. Verfahren zur Auslegung einer Entladungslampe (2), die zur Verwendung mit einem lichtsammelnden System, insbesondere in einem Projektor zur Daten- oder Videoprojektion vorgesehen ist, mit einem Brenner (14), der ein Elektroden (22, 24) aufnehmendes Entladungsgefäß (16) aufweist, und der in einen elliptischen Reflektor (26) eingesetzt ist, wobei die Geometrie des Ellipsoids unter anderem durch zwei Brennpunkte ($F_1$, $F_2$) durch eine numerische Exzentrizität ($e_0$) sowie zwei Ellipsenhalbachsen (a, b) bestimmt ist und wobei das lichtsammelnde System durch eine Etendue (E) und einen Akzeptanzwinkel ($\gamma'$) **gekennzeichnet ist, dadurch gekennzeichnet, dass** die Exzentrizität ($e_0$) der Ellipse nach

$$e_o = e_a(\gamma') - \Delta e(\gamma', E, g) \qquad \text{Gleichung 3}$$

an das lichtsammelnde System angepasst ist, wobei

$$e_a = \frac{\sqrt{2}+1-\tan\frac{\gamma'}{2}}{\sqrt{2}+1+\tan\frac{\gamma'}{2}} \qquad \text{Gleichung 1}$$

und

$$\Delta e = 1.3\sin 2\gamma' \exp\left(-2\frac{E^{0.17}}{g}\right) \qquad \text{Gleichung 2}$$

und g die Bogenlänge der Entladungslampe (2) ist.

2. Verfahren nach Anspruch 1, wobei die näher zum Ellipsenscheitel (28) angeordnete Brennweite ($f_1$) größer als 8 mm gewählt wird.

3. Verfahren nach Anspruch 1 oder 2, wobei die längere Brennweite ($f_2$) nach

$$f_2 = \frac{L+\frac{d}{4}\left[\frac{\sqrt{2}+1}{m}-\frac{m}{\sqrt{2}+1}\right]}{1-m} \qquad \text{Gleichung 4}$$

bestimmt wird, mit

$$m = \frac{1-e_o}{1+e_o} = \frac{f_1}{f_2} \qquad \text{Gleichung 5}$$

und daraus die Ellipsenhalbachsen (a, b) nach

$$a = \frac{f_2}{1+e_o} \qquad \text{Gleichung 6}$$

$$b = a\sqrt{1-e_o^{\;2}} \qquad \text{Gleichung 7}$$

berechnet werden.

4. Verfahren nach Anspruch 1 oder 2, wobei die längere Brennweite ($f_2$) nach

$$f_2 = \frac{1}{1-m}\left[ L + \frac{d}{2} \frac{\left( \frac{\sqrt{2}+1}{m} - \frac{m}{\sqrt{2}+1} \right) - 2\tan\xi}{2 + \left( \frac{\sqrt{2}+1}{m} - \frac{m}{\sqrt{2}+1} \right)\tan\xi} \right]$$ Gleichung 8

bestimmt wird, mit

$$m = \frac{1-e_o}{1+e_o} = \frac{f_1}{f_2}$$ Gleichung 5

und $0 \le \xi \le 2°$ und daraus die Ellipsenhalbachsen (a, b) nach

$$a = \frac{f_2}{1+e_o}$$ Gleichung 6

$$b = a\sqrt{1-e_o^2}$$ Gleichung 7

berechnet werden.

5. Lampe, insbesondere Entladungslampe, zur Verwendung mit einem lichtsammelnden System, insbesondere in einem Projektor zur Daten- oder Videoprojektion, mit einem Brenner (14), der ein Elektroden (22, 24) aufnehmendes Entladungsgefäß (16) aufweist, und der in einen elliptischen Reflektor (26) eingesetzt ist, wobei die Geometrie des Ellipsoides unter anderem durch zwei Brennpunkte ($F_1$, $F_2$), durch die numerische Exzentrizität ($e_0$) sowie zwei Ellipsenhalbachsen (a, b) bestimmt ist, und wobei das lichtsammelnde System durch eine Etendue (E) und einen Akzeptanzwinkel ($\gamma'$) charakterisiert ist, **gekennzeichnet durch** eine Reflektorgeometrie, die nach einem der vorhergehenden Ansprüche ausgelegt ist.

6. Lampe nach Anspruch 5, wobei der Reflektor (26) etwa parallel zur optischen Achse (30) mit vier Abflachungen (38, 40; 42, 44) versehen ist, wobei jeweils zwei Abflachungen (38, 40; 32, 44) im Parallelabstand zueinander angeordnet sind.

7. Lampe nach Anspruch 6, wobei der Abstand zwischen zwei Abflachungen (42, 44) geringer ist als zwischen den beiden anderen Abflachungen (38, 40).

8. Lampe nach einem der Ansprüche 5 bis 7, wobei der Brenner (14) eine Hochdruckentladungslampe ist.

**Claims**

1. Method for designing a discharge lamp (2) that is provided for use with a light-gathering system, in particular in a projector for data or video projection, having a burner (14) that has a discharge vessel (16) accommodating electrodes (22, 24), and which is inserted into an elliptical reflector (26), the geometry of the ellipsoid being determined, inter alia, by two focal points ($F_1$, $F_2$), by a numerical eccentricity ($e_0$) and by two ellipse semiaxes (a, b), and the light-gathering system being **characterized by** an etendue (E) and an acceptance angle (γ), **characterized in that** the eccentricity ($e_o$) of the ellipse according to

$$E_0 = e_a(\gamma') - \Delta e(\gamma', E, g) \qquad \text{equation 3}$$

is adapted to the light-gathering system, the following equations

$$e_a = \frac{\sqrt{2} + 1 - \tan\dfrac{\gamma'}{2}}{\sqrt{2} + 1 + \tan\dfrac{\gamma'}{2}} \qquad \text{equation 1}$$

and

$$\Delta e = 1.3 \sin 2\gamma' \exp\left(-2\frac{E^{0.17}}{g}\right) \qquad \text{equation 2}$$

being valid, and g being the arc length of the discharge lamp (2).

**2.** Method according to Claim 1, in which the focal length ($f_1$) arranged closer to the ellipse vertex (28) is selected to be greater than 8 mm.

**3.** Method according to Claim 1 or 2, in which the longer focal length ($f_2$) is determined according to

$$f_2 = \frac{L + \dfrac{d}{4}\left[\dfrac{\sqrt{2} + 1}{m} - \dfrac{m}{\sqrt{2} + 1}\right]}{1 - m} \qquad \text{equation 4,}$$

where

$$m = \frac{1 - e_o}{1 + e_o} = \frac{f_1}{f_2} \qquad \text{equation 5,}$$

and the ellipse semiaxes (a, b) are calculated therefrom according to

$$a = \frac{f_2}{1 + e_o} \qquad \text{equation 6}$$

$$b = a\sqrt{1-e_o^{2}} \qquad \text{equation 7}$$

**4.** Method according to Claim 1 or 2, in which the longer focal length ($f_2$) is determined according to

equation 8,

$$f_2 = \frac{1}{1-m}\left[L + \frac{d}{2}\frac{\left(\frac{\sqrt{2}+1}{m} - \frac{m}{\sqrt{2}+1}\right) - 2\tan\xi}{2 + \left(\frac{\sqrt{2}+1}{m} - \frac{m}{\sqrt{2}+1}\right)\tan\xi}\right]$$

where

$$m = \frac{1-e_o}{1+e_o} = \frac{f_1}{f_2} \quad \text{equation 5}$$

and $0 \le \zeta \le 2°$ and the ellipse semiaxes (a, b) are calculated therefrom according to

$$a = \frac{f_2}{1+e_o} \quad \text{equation 6}$$

$$b = a\sqrt{1-e_o^{2}} \quad \text{equation 7.}$$

**5.** Lamp, in particular a discharge lamp, for use with a light-gathering system, in particular in a projector for data or video projection, having a burner (14) that has a discharge vessel (16) accommodating electrodes (22, 24), and which is inserted into an elliptical reflector (26), the geometry of the ellipsoid being determined, inter alia, by two focal points ($F_1$, $F_2$), by a numerical eccentricity ($e_o$) and by two ellipse semiaxes (a, b), and the light-gathering system being **characterized by** an etendue (E) and an acceptance angle ($\gamma$), **characterized by** a reflector geometry that is designed according to one of the preceding claims.

**6.** Lamp according to Claim 5, in which the reflector (26) is provided in a fashion approximately parallel to the optical axis (30) with four flats (38, 40; 42, 44), in each case two flats (38, 40; 32, 44) being arranged at a spacing parallel to one another.

**7.** Lamp according to Claim 6, in which the spacing between two flats (42, 44) is smaller than between two other flats (38, 40).

**8.** Lamp according to one of Claims 5 to 7, in which the burner (14) is a high-pressure discharge lamp.

**Revendications**

1. Procédé de conception d'une lampe ( 2 ) à décharge prévue pour être utilisée avec un système collecteur de la lumière, notamment dans un projecteur pour une projection de données ou une projection vidéo, comprenant un générateur ( 14 ) d'arc qui a une enceinte ( 16 ) de décharge recevant des électrodes ( 22, 24 ) et qui est mis dans un réflecteur ( 26 ) elliptique, la géométrie de l'ellipsoïde étant déterminée, entre autres, par deux foyers ( $F_1$, $F_2$ ) par l'excentricité ( $e_0$ ) numérique ainsi que par deux demi-axes ( a, b ) d'ellipse et dans lequel le système collecteur de la lumière est **caractérisé par** une étendue ( E ) et un angle ( $\gamma$ ) d'acceptation, **caractérisé en ce que** l'excentricité ( $e_0$ ) de l'ellipse est adaptée au système collecteur de la lumière suivant

$$e_a = e_a(\gamma') - \Delta e(\gamma', E, g) \qquad \text{Equation 3}$$

dans lequel

$$e_a = \frac{\sqrt{2} + 1 - \tan\frac{\gamma'}{2}}{\sqrt{2} + 1 + \tan\frac{\gamma'}{2}} \qquad \text{Equation 1}$$

et

$$\Delta e = 1.3 \sin 2\gamma' \exp\left(-2\frac{E^{0.17}}{g}\right) \qquad \text{Equation 2}$$

et g est la longueur d'arc de la lampe ( 2 ) à décharge.

2. Procédé suivant la revendication 1, dans lequel on choisit la distance ( $f_1$ ) focale disposée près du sommet ( 28 ) de l'ellipse plus grande que 8 mm.

3. Procédé suivant la revendication 1 ou 2, dans lequel on détermine la distance ( $f_2$ ) focale la plus grande suivant

$$f_2 = \frac{L + \frac{d}{4}\left[\frac{\sqrt{2}+1}{m} - \frac{m}{\sqrt{2}+1}\right]}{1 - m} \qquad \text{Equation 4}$$

avec

$$m = \frac{1 - e_a}{1 + e_a} = \frac{f_1}{f_2} \qquad \text{Equation 5}$$

et on en calcule les demi-axes ( a, b ) de l'ellipse suivant

$$a = \frac{f_2}{1 + e_o} \qquad\qquad \text{Equation 6}$$

$$b = a\sqrt{1 - e_o^{\;2}} \qquad\qquad \text{Equation 7}$$

**4.** Procédé suivant la revendication 1 ou 2, dans lequel on détermine la distance ( $f_2$ ) focale la plus grande suivant

$$f_2 = \frac{1}{1-m}\left[L + \frac{d}{2}\frac{\left(\dfrac{\sqrt{2}+1}{m} - \dfrac{m}{\sqrt{2}+1}\right) - 2\tan\xi}{2 + \left(\dfrac{\sqrt{2}+1}{m} - \dfrac{m}{\sqrt{2}+1}\right)\tan\xi}\right] \qquad \text{Equation 8}$$

avec

$$m = \frac{1 - e_o}{1 + e_o} = \frac{f_1}{f_2} \qquad\qquad \text{Equation 5}$$

et $0 \le \xi \le 2°$ on en calcule les demi-axes ( a, b ) de l'ellipse suivant

$$a = \frac{f_2}{1 + e_o} \qquad\qquad \text{Equation 6}$$

$$b = a\sqrt{1 - e_o^{\;2}} \qquad\qquad \text{Equation 7}$$

**5.** Lampe, notamment lampe à décharge, à utiliser avec un système collecteur de la lumière, notamment dans un projecteur pour une projection de données ou une projection vidéo, comprenant un générateur ( 14 ) d'arc qui a une enceinte ( 16 ) de décharge recevant des électrodes ( 22, 24 ) et qui est mis dans un réflecteur ( 26 ) elliptique, la géométrie de l'ellipsoïde étant déterminée, entre autres, par deux foyers ( $F_1$, $F_2$ ) par l'excentricité ( $e_0$ ) numérique ainsi que par deux demi-axes ( a, b ) d'ellipse et dans lequel le système collecteur de la lumière est **caractérisé par** une étendue ( E ) et un angle ( $\gamma$ ) d'acceptation, **caractérisée par** une géométrie du réflecteur qui est conçue suivant l'une des revendications précédentes.

**6.** Lampe suivant la revendication 5, dans laquelle le réflecteur ( 6 ) est muni de quatre méplats ( 38, 40 ; 42, 44 ) à peu près parallèlement à l'axe ( 30 ) optique, respectivement deux méplats ( 38, 40 ; 32, 44 ) étant disposés à distance parallèlement l'un à l'autre.

**7.** Lampe suivant la revendication 6, dans laquelle la distance entre deux méplats ( 42, 44 ) est plus petite que la distance entre les deux autres méplats ( 38, 40 ).

**8.** Lampe suivant l'une des revendications 5 à 7, dans laquelle le générateur ( 14 ) d'arc est une lampe à décharge à

haute pression.

FIG 1

FIG 2

FIG 3

36

ξ

34

32

32'

**FIG 4**

38

42, 44

14

26

40

**FIG 5**

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5829858 A
- US 5902033 A
- EP 1220294 A1